# EUROPÄISCHE PATENTSCHRIFT

(11) **EP 0 545 031 B1**
(45) Veröffentlichungstag und Bekanntmachung des Hinweises auf die Patenterteilung: **18.09.1996**
(21) Anmeldenummer: 92117171.6
(22) Anmeldetag: 08.10.1992
(51) Int. Cl.: H04N 7/24

(54) **Verfahren zur Aufbereitung von geträgerten Fernsehsignalen und/oder Tonsignalen sowie Anwendung**
Method of processing television signals on carrier and/or sound signals and use of the method
Méthode de préparation de signaux de télévision sur proteuse et/ou de signaux et son utilisation correspondante

(30) Priorität: 02.11.1991 DE 4136111
(43) Veröffentlichungstag der Anmeldung: 09.06.1993
(73) Patentinhaber: ROBERT BOSCH GMBH, 70442 Stuttgart (DE)
(72) Erfinder: Grotz, Karlheinz, Dipl.-Ing. (FH), W-7012 Fellbach (DE); Krull, Klaus, Dipl.-Ing. (FH), W-7153 Weissach i.T. (DE); Süssmeier, Georg, Dipl.-Ing., W-7150 Backnang (DE)

(56) Entgegenhaltungen:
- EP-A- 0 324 954
- DE-A- 3 707 243
- DE-A- 4 008 201

## Beschreibung

Die Erfindung geht aus von einem Verfahren gemäß dem Oberbegriff des Patentanspruchs 1. Ein solches Verfahren ist bekannt aus DE 40 08 201 A1.

Beim Verfahren gemäß DE 40 08 201 A1 werden aufzubereitende Fernsehsignale einzeln mittels A/D-Wandlern digitalisiert und jeweils digital in verschiedene Frequenzbereiche umgesetzt, wobei die Umsetzung so vorgenommen wird, daß sich zumindest die Nutzsignalanteile frequenzmäßig nicht überlappen. Die so umgesetzten Fernsehsignale werden anschließend durch digitale Addition zu einem Frequenzmultiplexsignal zusammengeführt, welches übertragen wird. Empfangsseitig wird das Frequenzmultiplexsignal vorzugsweise mit nur einem D/A-Wandler rückgewandelt.

Aufgabe der Erfindung ist es, bei geringem Aufwand eine qualitativ hochwertige Signalübertragung zu ermöglichen. Diese Aufgabe wird durch die Schritte des Anspruchs 1 gelöst. Die weiteren Ansprüche zeigen Weiterbildungen bzw. eine Anwendung des Verfahrens auf.

Die Erfindung beruht auf folgenden Erkenntnissen: Durch die Maßnahmen gemäß der Erfindung müssen die Signale vor der Übertragung nicht demoduliert, beispielsweise in FBAS und Tonsignale, YUV und Tonsignale oder Komponentensignale (z.B. MAC-Signale), und nach der Übertragung wieder moduliert werden. Ein bei analoger Modulation/Demodulation zwangsläufig auftretender Qualitätsverlust wird vermieden. Nach der Übertragung können die Signale auf einfach Weise und ohne großen Qualitätsverlust kompatibel für bestehende Zubringer- und/oder Verteilnetze aufbereitet werden, so daß bestehende analoge oder digitale Übertragungs- und/oder Verteileinrichtungen, z.B. bestehende KTV-Netze, weiterverwendet werden können.

Aus DE 37 07 243 C2 ist es zwar bekannt Fernseh- und Tonsignale digital für eine Zeitmultiplexübertragung aufzubereiten. Dort werden jedoch im Gegensatz zur erfindungsgemäßen Lösung die Zwischenfrequenzsignale zuerst analog von der Zwischenfrequenzlage in Basisbandlage umgesetzt und erst anschließend digitalisiert. Diese Methode erfordert einen hohen Aufwand an analogen Komponenten, z.B. Filtern, die außerdem noch zu Qualitätseinbußen für die aufzubereitenden Signale führen können.

Die Ausgestaltung nach Anspruch 2 hat den Vorteil, daß insbesondere bei Versorgung weniger Teilnehmer bestehende Übertragungseinrichtungen ohne Mehraufwand weiterbenutzt werden können. Auch ist diese Ausgestaltung flexibel bezüglich Weiterverarbeitung der Signale. Die Ausgestaltung gemäß Anspruch 3 läßt eine kostengünstige und qualitativ hochwertige Signalverteilung über LWL-Netze, insbesondere auch Ortsnetze zu. Da die Signale in hoher Qualität an den LWL-Endstellen zur Verfügung stehen, läßt sich der empfangsseitige Aufwand beträchtlich reduzieren. Einzelumsetzungen im Analogbereich entfallen. Die empfangsseitige D/A-Wandlung kann für mehrere Kanäle mit nur einem D/A-Wandler vorgenommen werden. Die erfindungsgemäße Signalaufbereitung ist auch für beliebige Fernsehnormen geeignet, insbesondere auch für die Frequenzraster der MAC- oder HDMAC-Signale. Der besondere Vorteil der erfindungsgemäßen Lösung ist die Einsatzmöglichkeit im gesamten Breitbandverteilnetz, d.h. von der Einspeisequelle bis zum Hauptübergabepunkt (HÜP) beim Teilnehmer, ohne daß das Konzept der Signalverarbeitung und die Systemkomponenten verändert werden müßten.

Beispiele für das erfindungsgemäße Verfahren bzw. dessen Anwendung werden nun anhand von Zeichnungen erläutert. Es zeigen:
Figur 1 das Prinzip der digitalen Frequenzumsetzung für 8 TV-Kanäle,
Figur 2 das Prinzip der Übertragung von der Quelle bis zum Hauptübergabepunkt des Teilnehmers,
Figur 3 die Signal spektren vor und nach der Umsetzung in Basisbandlage,
Figur 4 einen Rahmenaufbau zur Übertragung eines TV-Signals,
Figur 5 ein Blockschaltbild für die Einzelkanalübertragung eines TV-Signals mit 139,264 Mbit/s,
Figur 6 ein Blockschaltbild für die digitale Frequenzumsetzung mit zugehörigen Spektren,
Figur 7 die Frequenzgänge der bei der digitalen Frequenzumsetzung benutzten Filter.

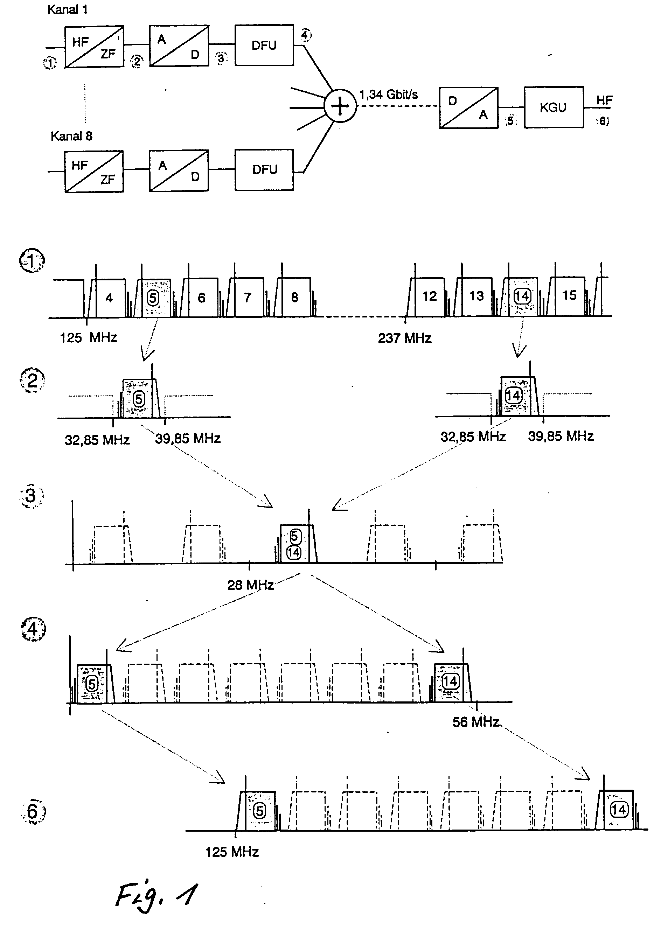

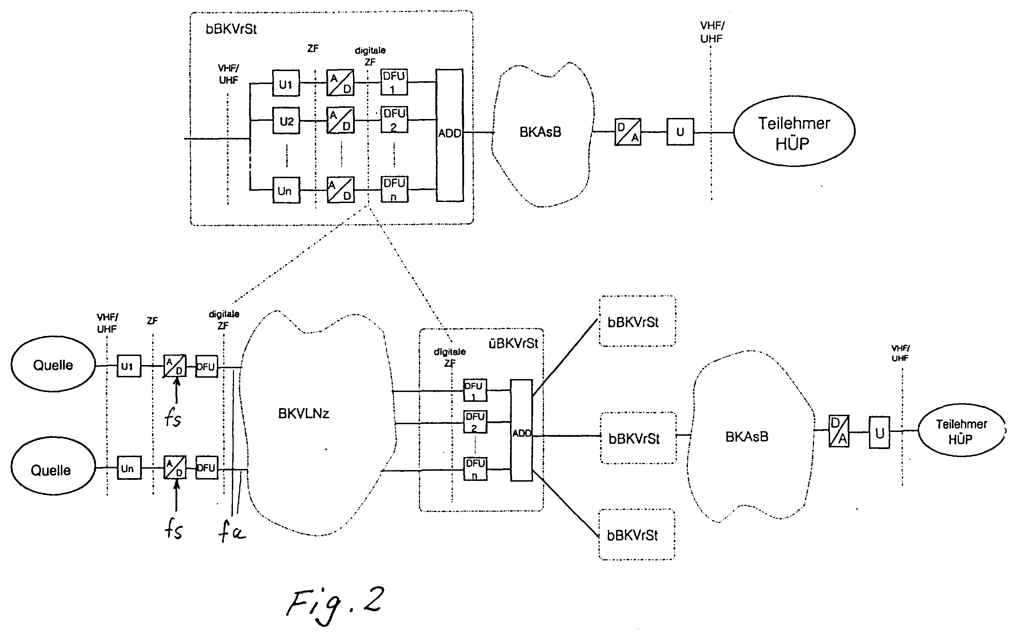

Die einzelnen Verfahrensschritte der Signalaufbereitung sind in Figur 1 am Beispiel eines 8-kanaligen Übertragungssystems im
7 MHz-Raster dargestellt. Die Fernsehkanäle, die sich üblicherweise in restseitenbandmodulierter Form mit zwei aufmodulierten Tonträgern in HF-Lage (1) befinden, werden in den Norm ZF-Bereich von 32,85 - 39,85 MHz umgesetzt (2) und mit einer Abtastfrequenz von 28 MHz mittels jeweils eines A/D-Wandlers digitalisiert (3). In Figur 1 ist dieser Vorgang beispielhaft für den TV-Kanal 5 (unterer Sonderkanalbereich) und den TV-Kanal 14 (oberer Sonderkanalbereich) gezeigt. Es ist zu beachten, daß die Signalform des TV-Signals nicht verändert und in geschlossener Form (restseitenbandmoduliert) digitalisiert wird. Am Ausgang jedes A/D-Wandlers liegt also ein "digitales ZF-Signal" vor (3). Für die Aufbereitung zur Übertragung erfolgt nun ein weiterer Schritt (Umsetzung der geschlossen digitalisierten Signale in Basisbandlage), der in Figur 1 nicht dargestellt ist und erst in Zusammenhang mit Figur 2 näher erläutert wird. Die nachfolgende digitale Frequenzumsetzung mittels der Baugruppen DFU setzt die Signale kanalweise digital in jeweils verschiedene Frequenzbereiche um, wobei die Umsetzung so vorgenommen wird, daß sich zumindest die Nutzsignalanteile frequenzmäßig nicht überlappen. Praktisch wird so vorgegangen, daß jedes Kanalsignal in einen anderen, jedoch beliebig wählbaren 7 MHz-Frequenzschlitz des Frequenzbandes (4) umgesetzt wird, das am Ausgang des digitalen Frequenzumsetzers, bestehend aus den 8 Einzelumsetzern DFU, vorliegt. Die 8 Kanalsignale werden dann durch digitale Addition, symbolisiert durch die Einheit ⊕ zu einem 8-kanaligen digitalen Frequenzmultiplexsignal zusammengefügt. Die Bandbreite am Addierausgang ist dann 56 MHz (8x7 MHz).

Dieses Band wird dann beim 8-kanaligen Systembeispiel mit einer Bitrate von 1 344 Mbit/s (einschließlich der Synchronisation) durch ein optisches Übertragungssystem zur Empfangsseite übertragen. In einem System mit einer Übertragungsbitrate von ca. 2,7 Gbit/s können so bis zu 16 TV-Programme übertragen werden. Auf der Empfängerseite befinden sich außer der optischen Empfangseinheit vorzugsweise nur noch ein D/A-Wandler für das gesamte Frequenzmultiplexsignal, der dieses Frequenzmultiplexsignal zurückwandelt und ein breitbandiger HF-Umsetzer KGU, der die Kanalgruppe von 8 TV-Kanälen in den für den Teilnehmer gewünschten und empfangskompatiblen VHF/UHF-Bereich umsetzt (6).

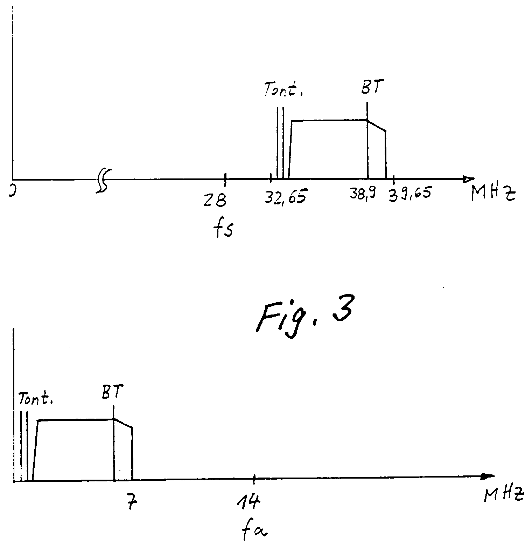

Diese Signalaufbereitung gemäß Figur 1 bildet auch die Grundlage des Verfahrens gemäß DE 40 08 201 A1. In Abwandlung dieses Prinzips wird nun aber erfindungsgemäß die Schnittstelle "digitale Zwischenfrequenz" aufgetrennt (Fig. 2) und eine zusätzliche Umsetzung der digitalen Zwischenfrequenzsignale in den Frequenzbereich 0-7MHz, also in Basisbandlage, vorgenommen. Als Basisbandlage ist hier ein restseitenbandmoduliertes Fernsehsignal mit Bildträger und Begleitton gemeint, welches im Frequenzbereich möglichst nahe zur Frequenz 0 hin umgesetzt wurde. Figur 3 zeigt die Spektren für einen Einzelkanal vor und nach der Umsetzung in diese Basisbandlage. Der A/D-Wandler führt eine sogenannte Unterabtastung des Zwischenfrequenzsignals (32,85 - 39,85 MHz) mit einer Abtastfrequenz fₛ = 28MHz durch. Das verallgemeinerte Nyquisttheorem, welches auf die Bandbreite des abgetasteten Signals bezogen ist, wird also nicht verletzt. Der digitale Frequenzumsetzer DFU führt eine Abtastratenwandlung um den Faktor 2 durch (fₐ = 14 MHz). Mit einer Auflösung von 9 bit pro Signalwert liegt an der Schnittstelle "digitale ZF" das Signal mit einer Bitrate von 126 Mbit/s (14 MHz x 9 bit) an. Dieses Signal wird, beispielsweise über ein Breitbandkommunikations-Verbindungsliniennetz (BKVLNz), im Zeitmultiplexverfahren übertragen. Die Systemkomponenten im Netz können so verteilt werden, daß sowohl eine Signalzuführung über das BK-Verbindungsliniennetz zur übergeordneten BK-Verstärkerstelle üKVrSt als auch über eine Verteilung von der benutzerseitigen Verstärkerstelle bBKVrSt über das BK-Anschlußnetz BKAsB zum Teilnehmer-Hauptübergabepunkt HÜP möglich ist. Eine derartige Signalaufbereitung kann sich auch schon bei der Quelle befinden. Die digitalen Frequenzumsetzer DFU1...DFUn setzen dann die Signale, wie im Zusammenhang mit Figur 1 schon beschrieben, in den zur Verteilung gewünschten Frequenzschlitz um.

Die digitalen ZF Signale können zur Zeitmultiplexübertragung jeweils entweder in einen 139,264 Mbit/s-Rahmen der plesiochronen digitalen Hierarchie gemultiplext oder in einen STM1-Rahmen der synchronen Hierarchie gemappt werden und in Übertragungseinrichtungen des BK-Verbindungsliniennetzes BKVLNz oder des Fernmeldenetzes (Breitbandverteilnetz, Richtfunk, Lichtwellenleiternetz) eingespeist werden.

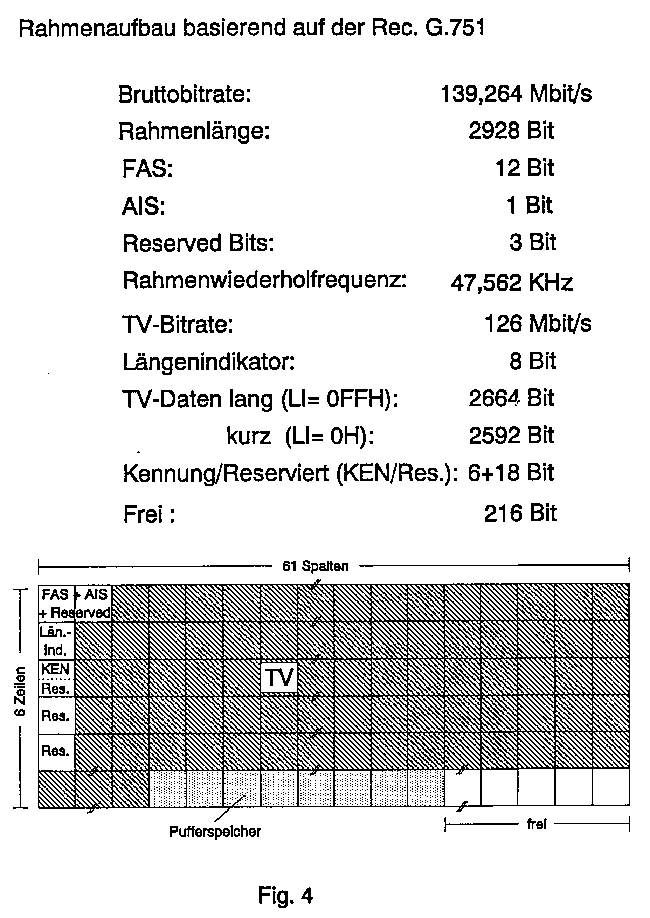

In Figur 4 st ein möglicher Rahmenaufbau für die TV-Übertragung nach der CCITT Empfehlung G.751 gezeigt. Die 2928 Bits des Rahmens sind byteweise in 61 Spalten und 6 Zeilen angeordnet. Wegen der 9-bit-Struktur des TV-Signals und der 8-bit-Struktur des Rahmens ergeben sich zwei unterschiedliche Rahmenkonfigurationen. Das TV-Signal belegte im ersten Rahmen 333 Bytes und im zweiten Rahmen 324 Bytes. Mit Hilfe des Längenindikators LI kann auf der Empfangsseite die aktuelle Belegung des Rahmens festgestellt werden. Die Signale KEN/Res. dienen zur Synchronisierung der möglicherweise auf zwei verschiedenen Wegen übertragenen TV-Signalen.

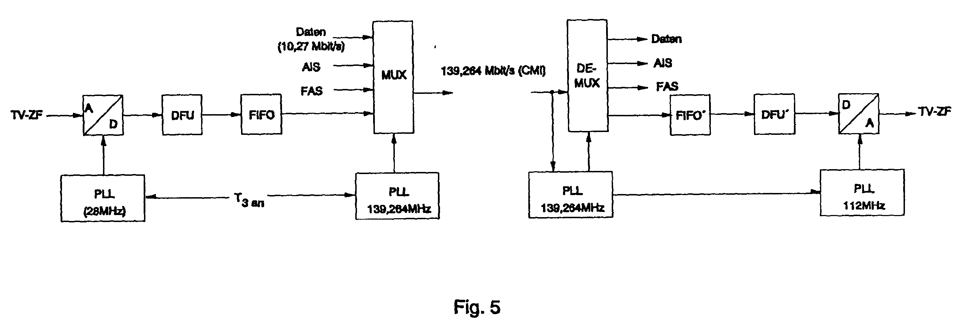

Figur 5 zeigt in einem Blockschaltbild die Baugruppen für eine TV-Kanal Einzelübertragung mit der Bitrate 139,264 Mbit/s. Das Ausgangssignal des digitalen Frequenzumsetzers DFU mit der Bitrate von 126 Mbit/s wird über einen Pufferspeicher FIFO zum Multiplexer geführt. Der Füllstand des Pufferspeichers bestimmt, welche Rahmenkonfiguration für die Übertragung gewählt werden muß. Der Übertragungstakt für den Multiplexer wird aus einem isochronen Takt (z.B. T₃ an) abgeleitet. Da von diesem Takt auch die Abtastfrequenz von 28 MHz für den A/D-Wandler abgeleitet wird, kann auf die üblichen Stopfverfahren verzichtet werden.

Die empfangsseitige Rahmensynchronisierung kann nach den bekannten Verfahren durchgeführt werden. Die Daten werden vom Demultiplexer in den Pufferspeicher FIFO' eingelesen und vom digitalen Frequenzumsetzer DFU' bei einer Taktrate von 112 MHz von der Basisbandlage in den digitalen ZF-Bereich umgesetzt. Bei der Einzelkanalübertragung werden alle Kanäle jeweils in diese gleiche digitale Zwischenfrequenzlage umgesetzt. Aus dieser digitalen Zwischenfrequenzlage kann eine digitale Einzelkanalweiterverarbeitung erfolgen. Alternativ hierzu kann nachfolgend mittels einem D/A-Wandler bei einer Taktrate von 112 MHz eine Umsetzung in Norm-ZF-Lage (32,85- 39,85 MHz) erfolgen, so daß eine analoge Weiterverarbeitung, z. B. über bestehende Netze, möglich ist.

Als weitere Alternative können zur Bildung eines Frequenzmultiplexsignals (vgl. Figur 1 und 2) die digitalen Basisbandsignale mittels verschiedener digitaler Frequenzumsetzer DFU1...DFUn in verschiedene Frequenzschlitze des Frequenzbandes von 0...56 MHz umgesetzt werden (vgl. Figur 1, Zeile 4) und anschließend in ein Verteilnetz eingespeist werden. Die D/A-Wandler befinden sich dann bei den Hauptübergabepunkten HÜP der Teilnehmer, wo anschließend eine gruppenweise Frequenzumsetzung aller Kanäle mit nur einem Frequenzumsetzer U (Figur 2) erfolgt. Die Teilnehmer erhalten dann jeweils eine Kanalgruppe in HF-Lage (Figur 1, Zeile 6).

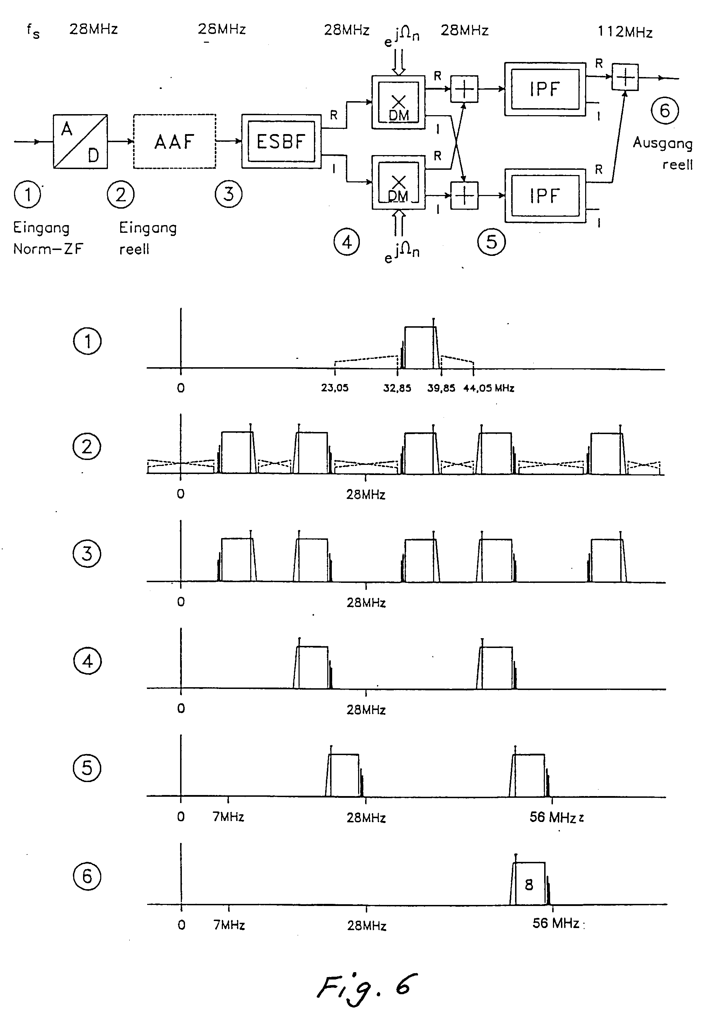

In Figur 6 ist das Prinzip der erfindungsgemäß benutzten digitalen Frequenzumsetzung für einen Einzelkanal anhand eines Blockschaltbildes und der Signalspektren dargestellt. Die Umsetzung in Basisbandlage ist hier nicht berücksichtigt. Die digitale Frequenzumsetzung hat die Aufgabe, die geschlossen codierten Einzelkanäle durch digitale Mischung und Filterung so aufzubereiten, daß sie danach durch digitale Addition zu einem Frequenzmultiplexsignal zusammengefaßt werden können. Nähere Einzelheiten zu einer solchen digitalen Frequenzumsetzung finden sich auch in den deutschen Patentanmeldungen DE-A-40 41 634 und DE-A-40 26 477.

Das Anti-Alias-Filter AAF und das Einseitenbandfilter ESBF sind für alle TV-Kanäle identisch. Die Trägerabtastwerte des digitalen Mischers DM und die Koeffizienten des Interpolationsfilters IPF unterscheiden sich dagegen von Kanal zu Kanal. Die Anwendung einer komplexen Filterung und einer Polyphasenfilterung im Interpolationsfilter führt einerseits zu einer erheblichen Reduktion des Filteraufwandes und andererseits zu einer gleichbleibend niedrigen Taktfrequenz von 28 MHz für die gesamte Verarbeitungseinheit.

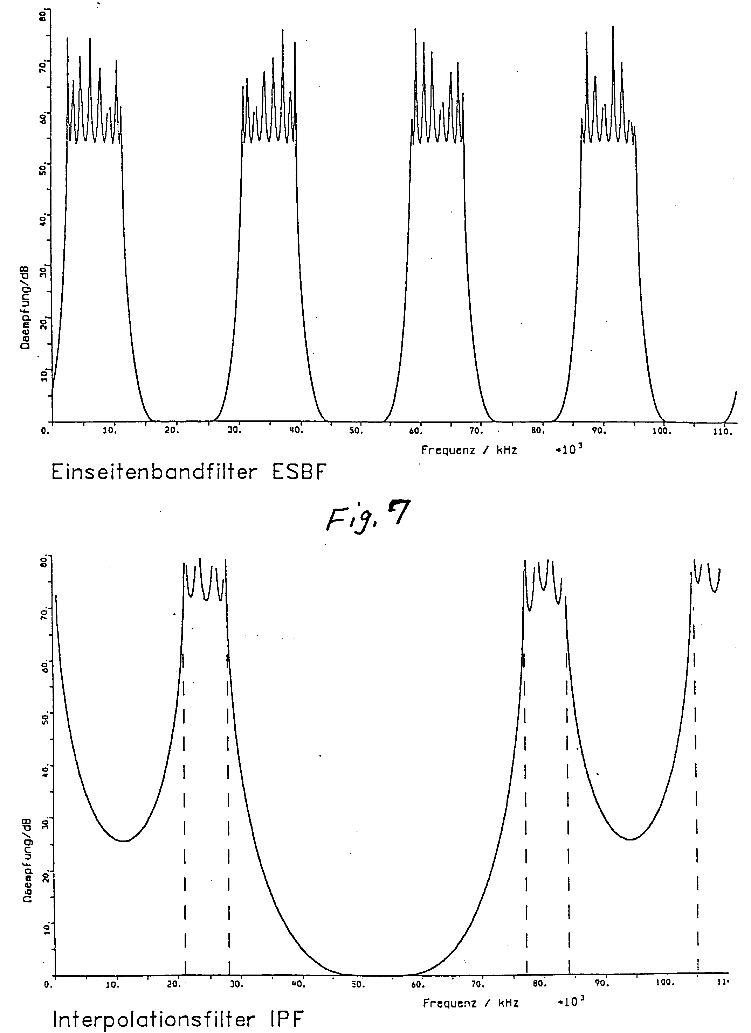

Die Aufgaben der einzelnen Funktionsblöcke gehen aus den Spektren in Figur 6 hervor. Nach der A/D-Wandlung (2) werden zunächst mit einem Anti-Alias-Filter AAF die restlichen Störanteile der Nachbarkanäle auf mindestens 60 dB unterdrückt (3). Im nächsten Schritt filtert das Einseitenbandfilter ESBF die unteren Seitenbänder und ihre Frequenzvielfachen aus (4). In Figur 7 sind die Frequenzgänge dieser Filter ESBF und IPF gezeigt. Wegen des durch das Einseitenbandfilter ESBF vergrößerten Bandabstandes, kann der Filteraufwand beim Interpolationsfilter IPF deutlich verringert werden.

Der digitale Mischer DM versetzt das Signal in den Sollbereich (5). In dem 8-kanaligen Systembeispiel wurde als Sollbereich das Frequenzband 49 - 56 MHz ausgewählt.

Abschließend unterdrückt das Interpolationsfilter IPF das in den Nutzfrequenzbereich fallende Wiederholspektrum (6) - je nach gewünschter Kanal-Nummer ist es das obere bzw. das untere Signalspektrum, das unterdrückt wird - so daß im nachfolgenden Addiererwerk mehrere, in derselben Weise aufbereitete Kanäle in dem Band von 0 - 56 MHz zusammengefaßt werden können.

## Patentansprüche

1. Verfahren zur Aufbereitung von geträgerten Fernsehsignalen mit Tonanteilen für Übertragungszwecke und deren empfangsseitige Nachbearbeitung mit folgenden Schritten:
a) die aufzubereitenden geträgerten Signale werden, falls sie nicht in Zwischenfrequenzlage vorliegen, in Zwischenfrequenzlage umgesetzt,
b) die zwischenfrequenten Signale werden kanalweise geschlossen digitalisiert,
c) die kanalweise geschlossen digitalisierten Signale in Zwischenfrequenzlage werden jeweils durch digitale Frequenzumsetzung durch Abtastratenwandlung in eine Basisbandlage gebracht derart, daß das geträgerte Fernsehsignal mit Tonanteilen nahe bei der Frequenz O erscheint, wobei der Bildträger am oberen Ende des so umgesetzten Fernsehsignals liegt,
d) die Basisbandsignale werden anschließend einzeln oder gemeinsam ohne weitere Frequenzumsetzung im Zeitmultiplexverfahren übertragen,
e) im Anschluß an die Übertragung im Zeitmultiplexverfahren werden die Basisbandsignale in ein Frequenzmultiplexsignal überführt, wobei diese Signale zur Bildung dieses Frequenzmultiplexsignals digital einzeln in ein jeweils gleiches oder jeweils anderes höheres Frequenzband umgesetzt werden.

2. Verfahren nach Anspruch 1, dadurch gekennzeichnet, daß die digitale Umsetzung der im Zeitmultiplexverfahren übertragenen Basisbandsignale in eine jeweils gleiche Zwischenfrequenzlage erfolgt, aus der eine digitale Weiterverarbeitung oder nach einer D/A-Wandlung mittels eines D/A-Wandlers eine analoge Weiterverarbeitung erfolgen kann.

3. Verfahren nach Anspruch 1, dadurch gekennzeichnet, daß die digitale Umsetzung der im Zeitmultiplexverfahren übertragenen Basisbandsignale kanalweise jeweils digital in verschiedene Frequenzbereiche erfolgt, wobei die Umsetzung so vorgenommen wird, daß sich zumindest die Nutzsignalanteile frequenzmäßig nicht überlappen, und daß die so umgesetzten Signale durch digitale Addition zu einem Frequenzmultiplexsignal zusammengefügt werden.

4. Verfahren nach Anspruch 3, dadurch gekennzeichnet, daß das Frequenzmultiplexsignal in ein Übertragungs- und/oder Verteilsystem eingespeist wird.

5. Verfahren nach Anspruch 3 oder 4, dadurch gekennzeichnet, daß das Frequenzmultiplexsignal nach der Übertragung und/oder Verteilung mit nur einem D/A-Wandler rückgewandelt wird.

6. Verfahren nach einem der Ansprüche 1 bis 5, dadurch gekennzeichnet, daß die Basisbandsignale jeweils in einem Zeitmultiplexrahmen mit beispielsweise 139,264 Mbits/s der plesiochronen digitalen Hierarchie untergebracht werden.

7. Verfahren nach einem der Ansprüche 1 bis 5, dadurch gekennzeichnet, daß die Basisbandsignale jeweils in einem Rahmen, beispielsweise im STM1-Rahmen, der synchronen digitalen Hierarchie untergebracht werden.

8. Anwendung des Verfahrens nach einem der Ansprüche 1 bis 7 für die Signalübertragung in einem Kabelfernsehzubringer- und/oder -verteilnetz.

## Claims

1. Method for conditioning modulated television signals having audio elements for transmission purposes and their subsequent processing at the receiving end, with the following steps:
a) the modulated signals to be conditioned are converted to intermediate frequency, if they are not already at intermediate frequency,
b) the intermediate-frequency signals are digitized in a self-contained manner in channels,
c) the signals which have been digitized in a self-contained manner in channels at intermediate frequency are converted to baseband, in each case by digital frequency conversion by means of sampling rate conversion, in such a manner that the modulated television signal having audio elements appears close to the frequency 0, the video carrier being located at the upper end of the television signal which is being converted in this way,
d) the baseband signals are subsequently transmitted individually or jointly, without any further frequency conversion, using the time-division multiplex method,
e) after the transmission using the time-division multiplex method, the baseband signals are converted into a frequency-division multiplex signal, these signals being digitally converted individually into a respectively identical frequency band or a respectively different higher frequency band in order to form this frequency-division multiplex signal.

2. Method according to Claim 1, characterized in that the digital conversion of the baseband signals, which have been transmitted using the time-division multiplex method, to a respectively identical intermediate frequency is carried out, from which intermediate frequency it is possible to carry out digital further processing or, after D/A conversion by means of a D/A converter, analogue further processing.

3. Method according to Claim 1, characterized in that the digital conversion of the baseband signals, which have been transmitted using the time-division multiplex method, is carried out in channels, in each case digitally, into different frequency ranges, the conversion being carried out such that at least the wanted signal elements do not overlap in terms of frequency, and in that the signals which have been converted in this way are joined together by digital addition to form a frequency-division multiplex signal.

4. Method according to Claim 3, characterized in that the frequency-division multiplex signal is fed to a transmission and/or distribution system.

5. Method according to Claim 3 or 4, characterized in that the frequency-division multiplex signal is converted back, after transmission and/or distribution, using only one D/A converter.

6. Method according to one of Claims 1 to 5, characterized in that the baseband signals are in each case accommodated in a time-division multiplex frame at, for example, 139.264 Mbits/s in the plesiochronous digital hierarchy.

7. Method according to one of Claims 1 to 5, characterized in that the baseband signals are in each case accommodated in a frame, for example in the STM1 frame, of the synchronous digital hierarchy.

8. Use of the method according to one of Claims 1 to 7 for signal transmission in a cable television feeder and/or distribution network.

## Revendications

1. Procédé pour préparer des signaux de télévision sur ondes porteuses avec des fractions de son aux fins de transmission et leur post-traitement du côté de la réception, avec les séquences suivantes :
a) les signaux sur ondes porteuses à préparer sont transformés en position de fréquence intermédiaire, au cas où ils ne sont pas dans une position de fréquence intermédiaire,
b les signaux de fréquence intermédiaire sont numérisés par canal fermé,
c) les signaux fermés numérisés par canal dans la position de fréquence intermédiaire sont respectivement mis par transformeur numérique de la fréquence par conversion du taux de balayage dans une plage de bande de base d'une manière telle que le signal de télévision sur onde porteuse avec des fractions de son apparaîsse au voisinage de la fréquence 0, la porteuse de l'image se trouvant à l'extrémité supérieure du signal de télévision ainsi transformé,
d) les signaux de bande de base sont ensuite transmis individuellement ou ensemble sans autre transformation de la fréquence selon un procédé multiple par partage du temps,
e) à la suite de la transmission dans le procédé multiplex dans le temps, on fait passer les signaux de bande de base dans un signal de fréquence multiplex, ces signaux étant transformés, pour former ce signal de fréquence multiplex, numériquement de façon individuelle en une bande de fréquence égale ou une autre bande de fréquence plus élevée.

2. Procédé selon la revendication 1,
caractérisé en ce que
la transformation numérique des signaux de bande de base avec un procédé multiplex par partage du temps en une position de fréquence intermédiaire respectivement égale peut avoir lieu à partir d'un retraitement numérique ou d'un retraitement analogique après une conversion numérique analogique au moyen d'un convertisseur numérique/analogique.

3. Procédé selon la revendication 1
caractérisé en ce que
la transformation numérique des signaux de bande de base transmise par un procédé multiplex par partage du temps a lieu par canal de façon numérique dans différentes gammes de fréquence, la transformation étant réalisée de telle façon qu'au moins les fractions de signaux utiles ne se recouvrent pas par fréquence et que les signaux ainsi transformés soient réunis par addition numérique à un signal multiplex de fréquence.

4. Procédé selon la revendication 3,
caractérisé en ce que
le signal multiplex de fréquence est alimenté dans le système de répartition et/ou de transmission.

5. Procédé selon la revendication 3 ou 4,
caractérisé en ce que
le signal multiplex de fréquence est reconverti après la transmission et/ou la répartition avec seulement un convertisseur numérique/ analogique.

6. Procédé selon l'une des revendications 1 à 5,
caractérisé en ce que
les signaux de bande de base sont logés respectivement dans un cadre dérivé en temps avec par exemple 139,264 Mbit/s de la hiérarchie numérique plesiochrone.

7. Procédé selon l'une des revendications 1 à 5,
caractérisé en ce que
les signaux de bande de base sont logés respectivement dans un cadre par exemple dans le cadre STM1, de la hiérarchie numérique synchrone.

8. Utilisation du procédé selon l'une des revendications 1 à 7, pour la transmission de signaux dans un réseau d'amenée de télévision par câble ou un réseau de distribution.
